# EUROPEAN PATENT SPECIFICATION

(11) **EP 1 014 466 B1**
(45) Date of publication and mention of the grant of the patent: **08.10.2003**
(21) Application number: 99103670.8
(22) Date of filing: 25.02.1999
(51) Int. Cl.: H01M 10/40, H01M 4/02, H01M 10/04

(54) **Solid state polymer batteries and method for manufacturing the same**
Feststoffbatterie mit Polymerelektrolyten und Verfahren zur Herstellung
Batterie solide à électrolyte polymère et procédé de fabrication

(30) Priority: 25.12.1998 JP 36890798
(43) Date of publication of application: 28.06.2000
(73) Proprietor: MATSUSHITA ELECTRIC INDUSTRIAL CO., LTD., Kadoma-shi, Osaka (JP)
(72) Inventor: Muraoka, Hiroki, Takatsuki-shi (JP); Kinoshita, Kazushige, Hirakata-shi (JP); Ohata, Tsumoru, Kyoto-shi (JP); Shimizu, Kyoushige, Neyagawa-shi (JP)
(74) Representative: Patentanwälte Leinweber & Zimmermann

(56) References cited:
- WO-A-97/06569
- WO-A-97/08769
- WO-A-99/60651

## Description

### Background of the Invention

### 1. Field of the Invention

The present invention relates to a polymer battery. More particularly, it relates to a flat battery, namely, so-called film-like polymer battery having a sheet-like or film-like positive electrode and negative electrode comprising respectively a perforated positive electrode collector and a perforated negative electrode collector which are coated with an active material layer containing a polymer absorbing and retaining a non-aqueous electrolyte, the negative electrode being provided with the positive electrodes on both sides with a film-like separator comprising a polymer absorbing and retaining a non-aqueous electrolyte and interposed between the negative electrode and the positive electrode, said negative electrode, positive electrodes and separators being laminated and integrated.

### 2. Description of Related Art

With recent miniaturization, weight-saving and reduction in thickness of portable electronic devices, miniaturization, weight-saving and reduction in thickness of batteries used as electric sources of these devices are also strongly demanded. As one method for the reduction of thickness, attention is given to solid state polymer batteries which use a gel-like separator comprising a polymer matrix which absorbs and retains a non-aqueous electrolyte. For example, as disclosed in U.S. Patent Nos.4,830,939 and 5,478,668, a satisfactory contact between the electrolyte and the electrodes can be realized in the batteries where said separator and the positive and negative electrodes are integrated by hot pressing.

In solid state polymer batteries using non-aqueous electrolyte, since no leakage of electrolyte occurs, a laminate sheet mainly composed of a flexible and thin resin film can be used as an exterior housing and thus the batteries can be reduced in thickness. However, when the positive electrode, separator and negative electrode are simply stacked, the resulting batteries suffer from the problem that the relative proportion of the collectors of the positive and negative electrodes in the total weight of the battery increases to cause decrease of energy density per weight as a battery.

For the solution of this problem, JP-A-10-189053 proposes a battery construction where a negative electrode comprising a perforated foil collector on both sides of which formed active material layers is provided with positive electrodes on both sides with a film-like separator interposed between the negative and positive electrodes and these are laminated and integrated.

JP-Appln. No.10-36992 discloses a construction of solid state polymer battery where positive electrodes are disposed on both sides of a sheet-like negative electrode with the above film-like separator interposed between both the positive and negative electrodes.

### Brief Summary of the Invention

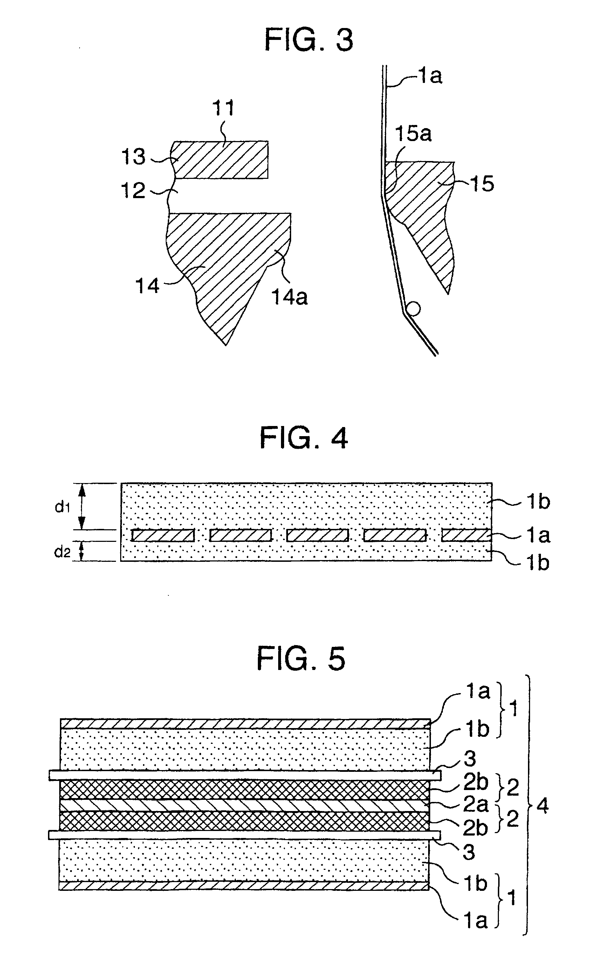

A problem of JP-Appln. No. 10-36992 which occurs since the collector is provided at the outer end surface of the positive electrode will be explained referring to FIG. 5. FIG. 5 shows a laminate electrode 4 comprising a positive electrode plate 1, a negative electrode plate 2 and a separator 3 interposed therebetween which are laminated and integrated. The positive electrode plate 1 comprises a perforated aluminum collector 1a and a positive electrode active material layer 1b formed by coating a paste of a positive electrode active material and drying the coat.

The negative electrode plate 2 comprises a perforated copper collector 2a and a negative electrode active material layers 2b formed on both sides of the collector 2a by coating a paste of a negative electrode active material and drying the coat. The separator 3 comprises a film of a polymer capable of absorbing and retaining a non-aqueous electrolyte, such as a copolymer of vinylidene fluoride and hexafluoropropylene (P(VDF-HFP)).

Two positive electrode plates 1 are laminated on both sides of the negative electrode plate 2 with the separator 3 interposed therebetween in such a manner that the negative electrode active material layer 2b and the positive electrode active material layer 1b face each other. These are integrated due to the fusion of the polymer portions caused by pressing under heating, thereby to form the laminate electrode 4. As compared with the construction comprising mere lamination of a positive electrode, a separator and a negative electrode, according to the above construction, the reaction part of the negative electrode is both the top and under sides, and, as a result, the reaction area as a battery becomes twice and current density per unit area can be reduced to make it possible to carry out the charging and discharging at a high current.

For polymer batteries using a film-like separator of a polymer absorbing and retaining a non-aqueous electrolyte, it is necessary not to hinder the migration of ions at the time of electromotive reaction in order to increase utilization ratio of active material. Therefore, it is preferred that the positive electrode collector which does not participate in the electromotive reaction is disposed on the outer end surface of the positive electrode which is opposite to the side facing the negative electrode, namely, the positive electrode collector is laminated on the surface of the positive electrode active material layer.

However, owing to expansion and shrinkage of active material, especially, positive electrode active material, caused by charging and discharging in the fabricated battery, the bond strength between the positive electrode collector and the positive electrode active material layer reduces. In the batteries of the laminate structure, since the positive electrode active material layer and the collector are bonded through only one face, the mechanical stress caused by expansion and shrinkage is concentrated at one side of the collector, resulting in the phenomenon of the collector being peeled off from the active material layer. When the peeling occurs, the electrical contact between the active material layer and the collector is deteriorated to cause failure in current collection. As mentioned above, the laminate structure improves utilization ratio of the active material on the one hand, but causes failure in current collection with carrying out charging and discharging on the other hand.

The battery described in WO 97/08769 comprises a positive electrode as center electrode and two negative electrodes above and below. The basic structure of the battery, however, is the same as the structure of the previously described battery, i.e. the collectors of the outer electrodes are disposed on the outer surfaces of the respective active material layers of the electrode. This battery therefore displays the same problems of the collector peeling off from the active material layer during use of the battery.

In JP-A-10-189053 and in WO 97/06569, the collector is provided in the center portion of thickness of the positive electrode, and, hence, there occurs no peeling off of the collector from the active material layer of the positive electrode which is caused by expansion or shrinkage of the active material of the positive electrode. However, the active material on outer side of the collector which is half in thickness of the positive electrode does not participate in the charge-discharge reaction so much. Therefore, the utilization ratio of the active material is not enhanced so much as corresponding to the amount of the active material of the positive electrode used.

The main object of the present invention is to provide a polymer battery which causes no failure in current collection at the positive electrode by improving the disposition of the positive electrode collector in respect to the positive electrode active material layer to avoid peeling of the collector from the active material layer caused by expansion and shrinkage of the active material.

Another object of the present invention is to provide a polymer battery having excellent discharge characteristics by improving the degree of participation in charge and discharge reaction of the positive electrode active material in the positive electrode active material layer, namely, the utilization ratio.

The present invention for attaining the above objects relates to a polymer battery which comprises a film-like or sheet-like negative electrode comprising a perforated negative electrode collector on both sides of which are formed active material layers containing a polymer absorbing and retaining a non-aqueous electrolyte, a film-like or sheet-like positive electrode comprising a perforated positive electrode collector on which is formed an active material layer containing said polymer, and a film-like or sheet-like separator comprising said polymer, said positive electrodes being disposed on both sides of said negative electrode with said separators interposed between the positive electrodes and negative electrode, these electrodes and separators being laminated and integrated, characterized in that the perforated positive electrode collector is embedded in the positive electrode active material layer by coating a paste of the positive electrode material on both sides of the perforated collector so that a bottom plane of the collector which faces the negative electrode is present at the position of 2/3 to 4/5 of the total thickness of the layer from the side facing the negative electrode. In this case, the positive electrode active material layer having a reminder thickness of 1/3 to 1/5 of the total thickness is disposed on the outer side of the collector. That is, it is characterized that the positive electrode collector is disposed in the state of being embedded shallowly in the outside portion of the positive electrode active material which does not face the negative electrode.

Such positive electrode can be obtained by coating a paste of the positive electrode active material on both sides of a perforated collector so that the ratio of the thickness of the paste coated on the side which faces the negative electrode and that of the paste coated on another side is within the range of 9:1-7:3, and then drying and pressing them.

According to such battery construction and production method, the greater part of the positive electrode active material layer is positioned on one side of the collector, namely, on the side facing the negative electrode, and, hence, function of current collection at the time of electromotive reaction is satisfactory and utilization ratio of the active material is increased.

The positive electrode collector is preferably a punching metal or lath metal made of aluminum or aluminum coating material light in weight from the point of weight efficiency. Furthermore, the many holes provided make easier the migration of ions in the vicinity of the collector which is caused by the electromotive reaction, and the active material positioned on the outer side of the collector can also be allowed to participate in the electromotive reaction. Accordingly, excellent discharge characteristics as a battery can be obtained by the synergistic effects of increase in utilization ratio of the positive electrode active material and doubling of reaction area at the negative electrode.

Furthermore, since the perforated collector is embedded in the active material, the collector does not readily peel off from the active material and, hence, failure in current collection does not occur, and reliability as a battery is enhanced.

### Brief Description of Drawings

FIG. 1 is a sectional view showing a battery construction in the embodiment of the present invention.
FIG. 2 is a sectional view showing a battery construction in the best mode of the present invention.
FIG. 3 is a diagram showing a construction of an apparatus used for the coating of a paste.
FIG. 4 is a sectional view showing a positive electrode when the paste has been coated.
FIG. 5 is a sectional view showing a battery construction of a reference example.

### Detailed Description of the Invention

Preferred embodiments of the present invention will be explained referring to the accompanying ' drawings. In these drawings, the elements common to those in the battery construction of the reference example shown in FIG. 5 are indicated by the same reference numerals as in FIG. 5.

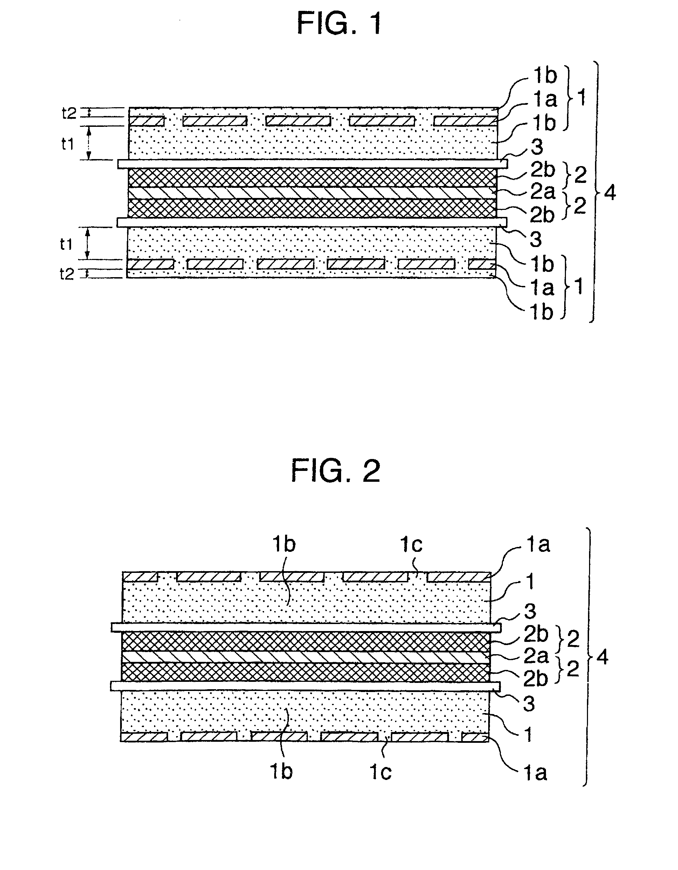

FIG. 1 shows a construction of polymer battery in the embodiment of the present invention. This battery is constructed in the form of a laminate electrode 4 made by laminating two positive electrodes 1 on both sides of a negative electrode 2 with separators 3 put between the positive electrodes and the negative electrode and integrating them. The positive electrode 1 comprises a perforated aluminum foil collector 1a subjected to lath processing. A positive electrode active material layer 1b is formed by coating a paste of the positive electrode material, followed by drying and pressing them. As the positive electrode collector 1a, an aluminum foil subjected to lath processing is used here, but there may also be used a punching metal or lath metal comprising a film-like material coated with aluminum and subjected to punching or lath processing. On the surface of the collector 1a is provided an electrically conductive carbon film comprising a mixture of a carbon fine powder such as acetylene black or Ketzen black and polyvinylidene fluoride as a binder in order to improve adhesion and conductivity to the paste. Opening ratio which determines the degree of porosity is preferably 50-60%, and thickness of the collector is preferably 25-60 µm from both the points of coating of the paste and current collecting function.

The positive electrode active material layer 1b is formed by coating a paste comprising a positive electrode active material, a conductive material and a polymer solution on the collector, after that removing the solvent in the paste by drying, and pressing the coat.

The positional relation of the collector 1a with respect to the positive electrode active material layer 1b in the positive electrode plate 1 is such that the collector 1a is disposed at the position apart outwardly from the center of the thickness of the positive electrode plate (outside portion in the laminate electrode). Specifically, as shown in FIG. 1, when the sum of thickness (t1) of the positive electrode active material between the side of the active material facing the negative electrode and the side of the active material facing the collector and thickness (t2) of the positive electrode active material of another side of the collector is taken as the total thickness (T) of the positive electrode active material layer, the collector is embedded so that a bottom plane of the collector facing the negative electrode is present at the position of 2/3-4/5 of the total thickness (T) from the side facing the negative electrode. Therefore, the positive electrode active material layer of the remaining 1/3-1/5 in thickness is disposed on the outer side of the collector.

According to a further preferred embodiment of the present invention, the positive electrode collector 1a is embedded in the surface portion of the positive electrode active material opposite to the side facing the negative electrode in such a state as the surface of the positive electrode active material and outer surface of the collector 1a being at the same level, namely, so-called in flushed state. As shown in FIG. 2, in this construction, the positive electrode active material is present on one side of the positive electrode collector 1a and in a hole 1c of the collector, and thus the active material in the hole 1c and the active material on one side of the collector together fix the collector 1a in fitting state.

Besides, even if the active material in the hole 1c expands, the force rather acts so as to strongly fix the collector 1a in the hole to prevent peeling off of the collector 1a from the active material, and, in addition, since no active material is present on the outer surface of the collector, all the active material can be allowed to surely participate in the electromotive reaction to increase the utilization ratio of the active material.

Such positive electrode is made in the following manner. FIG. 3 is a diagram showing the construction of the waist part of an apparatus for coating a paste of the positive electrode active material on the positive electrode collector. This coating apparatus comprises a die nozzle 11 having a slit gap 12 for discharging the paste and a smoothing nozzle 15 which is disposed facing the die nozzle 11 with forming a gap (a nozzle gap) through which the collector 1a is passed. The collector 1a comprising a lath metal of aluminum is continuously passed from the lower part to the upper part through the nozzle gap into which the paste is discharged from the gap 12 of the die nozzle 11, thereby to coat the paste on the collector. In FIG. 3, the die nozzle 11 is provided with an upper lip 13 and a lower lip 14 which form the slit gap 12, and the lower lip 14 has a protrusion 14a protruding towards the nozzle gap than the upper lip 13. This protrusion 14a retains thereon the paste discharged from the slit gap 12 to discharge the paste forward without dropping downwardly.

The smoothing nozzle 15 has no slit gap for discharging the paste and guides the strip-like collector 1a passing upwardly through the gap at the time of coating of the paste. Specifically, the smoothing nozzle 15 adjusts the position of the collector moving upwardly along the lip portion 15a so as to prevent deflection of the collector at the time of coating of the paste and straighten the collector wound in the form of hoop.

As mentioned above, coating of the paste is carried out by passing the collector 1a upwardly through the nozzle gap between a pair of the nozzles 11, 15. The paste is discharged from the die nozzle 11 and is sprayed onto the surface facing the slit gap 12. When a foil or sheet-like collector having no holes is used, naturally the paste is coated on only one side. However, since a lath metal having many holes is used here, the paste discharged from the slit gap 12 of die nozzle 11 enters into the holes of the collector. In addition, when the collector is in moving state, there is formed a slight gap between the collector and the lip portion 15a of the smoothing nozzle 15, and the paste entering into the holes gets into this slight gap and which is smoothened during the collector moving with being guided by the lip portion of the nozzle. As a result, the paste is also coated on the surface of the collector facing the smoothing nozzle 15.

The slight gap between the collector and the lip portion of the smoothing nozzle varies depending on the moving speed of the collector and the tension applied to the collector at the time of coating.

Therefore, when a perforated collector is used, the paste can be simultaneously coated on both sides of the collector at different thickness by properly adjusting the conditions such as amount of the paste discharged from the slit gap, the nozzle gap between the die nozzle and the smoothing nozzle, the moving speed and direction of the collector and the tension applied. This method can attain simplification and speedup of the coating step as compared with when the paste is coated on one side and then on another side separately at different thickness.

In the positive electrode in this embodiment, thickness of the paste coated on one side of the collector which faces the negative electrode upon fabrication of a battery is larger than thickness of another side. This can be attained by allowing the side of the positive electrode collector facing the negative electrode to be facing to the slit gap 12 and discharging the paste onto this side of the collector. Preferably, the coating conditions are set so that the ratio (d1:d2) of the thickness (d1) of the paste coated on the side of the collector facing the negative electrode and the thickness (d2) of the paste coated on another side of the collector is within the range of 9:1-7:3.

Thickness of the positive electrode active material layer and ratio of thickness of the active material layer to that of the collector greatly differ from those just after coating of the paste. This is because the thickness of the positive electrode active material layer becomes thinner since the organic solvent in the paste is volatilized and removed at drying, and further because the ratio of the thickness of the active material layer and that of the collector in the total thickness of the positive electrode varies before and after pressing due to the difference in the degree of compression of the active material layer and the collector. However, if a paste in which the components are uniformly dispersed is used, there is no difference in the degree of shrinkage of volume after dried depending on the coated position and the coated portion. In completely dried state, the ratio of thickness of the active material layers coated on both the top and back sides of the collector is nearly the same as the ratio at the time of coating.

Therefore, in the completely dried and pressed positive electrode of the ideal state, the ratio of the thickness of the pastes at the time of coating is nearly equal to the ratio of the thickness of the positive electrode active material layers after subjected to pressing.

In order to obtain the positive electrode of the ideal state, it is necessary to volatilize and remove the organic solvent by drying the positive electrode for a long period of time after coating of the paste. However, drying for a long time during the actual production needs a large-scale facilities and causes prolongation of operation time, and this is not preferred from the point of cost. Therefore, the positive electrode is subjected to pressing treatment in a properly dried state, for example 0.5-1 hour drying. In this state, the paste coated on the side of the collector facing the negative electrode is thicker than the paste coated on another side, and the degree of drying is low. For this reason, the ratio of the thickness of the positive electrode active material layers changes from the ratio at the time of coating of the paste. Accordingly, as shown in FIG. 4, although the paste is coated so that the ratio d1:d2 of the thickness (d1) of the positive electrode active material layer on one side of the collector and the thickness (d2) of the layer on another side at the time of coating of the paste is kept within the range of 9:1-7:3, the actual positive electrode after dried and pressed has the structure in which the proportion of the thickness (t1) of the positive electrode active material layer on the side of the collector facing the negative electrode and that of the thickness (t2) of the layer on another side is different, and the collector is disposed at the position of 2/3-4/5 of the total thickness of the active material inwardly from the side of the collector facing the negative electrode and the active material layer having a thickness of the remaining 1/3-1/5 of the total thickness is disposed on the outer side of the collector as shown in FIG. 1.

Furthermore, in order to obtain the positive electrode of the above-mentioned preferred embodiment as shown in FIG. 2, the following two methods can be employed. One of them is to widen the nozzle gap between the die nozzle and the smoothing nozzle to weaken the force generated by the paste entering the holes of the collector. Another is to reduce the amount (pressure) of the paste discharged from the slit gap and simultaneously to decrease the moving speed of the collector.

In the case of the former method, due to the widening of the nozzle gap, the paste discharged from the slit gap 12 lowers in its penetrating force at the time of arriving at the collector 1a which moves with being guided by the smoothing nozzle 15, and it enters in the holes of the collector, but does not pass through the holes and does not get into the back side of the collector. In the case of the latter method, due to the reduction of the amount (pressure) of the paste discharged, the amount of the paste coated on the collector naturally reduces and the paste does not pass through the holes and does not get into the back side of the collector. For securing the necessary amount of the paste to supply the shortage, the moving speed of the collector is lowered to keep the amount of the paste coated.

The negative electrode 2 comprises a perforated collector 2a on both sides of which are formed negative electrode active material layers 2b. The collector 2a comprises a lath metal or punching metal made of a copper foil, and is provided with an electrically conductive carbon coat on the surface in the same manner as in the positive electrode collector. A paste of a negative electrode active material is coated thereon, followed by drying and pressing to obtain the negative electrode.

The separator 3 is a film mainly composed of a polymer capable of absorbing and retaining the electrolyte, such as a copolymer (P(VDF-HFP)) of vinylidene fluoride and hexafluoropropylene and a plasticizer which is removed by an after-treatment for giving porosity.

The positive electrodes 1 are laminated on the negative electrode active material layers 2b on the both sides of the collector 2a of the negative electrode 2 so that the thicker positive electrode active material layer 1b faces the negative electrode active material 2b with the separator 3 interposed therebetween. Then, this laminate is integrated by subjecting to heating and pressing to cause heat fusion of the polymer portion, whereby a laminate electrode 4 is constructed. Then, the plasticizer is extracted and removed from the polymer portion with a solvent to make porous. This laminate electrode 4 is inserted in an exterior housing made of a laminate sheet mainly composed of a resin film. Thereafter, a given amount of a non-aqueous electrolyte is filled in the housing to impregnate the electrode portion including the separator with the electrolyte, and after or before the polymer is gelled, the opening portion of the housing is heat sealed to obtain a polymer battery.

The positive electrode active materials used include composite metal oxides, for example, lithium-containing composite metal oxides capable of reversibly releasing and taking lithium ions by charging and discharging, such as LiCoO₂, LiNiO₂ and LiMn₂O₄. Similarly, the negative electrode active materials of the negative electrode active material layer include carbon powders capable of intercalating and deintercalating lithium ions by charging and discharging, and especially preferred is mesophase carbon graphite obtained by carbonization and graphitization of carbonaceous mesophase particles.

The non-aqueous electrolytes absorbed and retained in the polymer can be suitably selected from those used in known non-aqueous electrolyte batteries, such as combinations of solutes such as LiClO₄, LiBF₄, LiPF₆ and LiCF₃SO₃ with organic solvents such as ethylene carbonate, propylene carbonate and ethylmethyl carbonate.

### Example

Examples of the present invention will be explained in detail using the drawings.

### Example 1

A polymer battery was produced by the following method.

A paste of positive electrode active material was prepared by mixing a solution prepared by dissolving 70 g of a copolymer of vinylidene fluoride and hexafluoropropylene (P(VDF-HFP)) in 1000 g of acetone, 1000 g of lithium cobalt oxide LiCoO₂, 50 g of acetylene black and 100 g of dibutyl phthalate (DBP) as a plasticizer. In this case, the acetone as a solvent contained in the paste was about 45% by weight.

As a positive electrode collector to be coated with this paste, was used an aluminum lath metal provided with an electrically conductive carbon coat on the surface. The carbon coating material coated on the surface of the positive electrode collector was prepared by dispersing and mixing 30 g of acetylene black and a solution (12% by weight) of polyvinylidene fluoride in N-methylpyrrolidone. This mixture was coated on the aluminum lath metal having a thickness of 40 µm and then dried by heating at a temperature of higher than 80°C to remove N-methylpyrrolidone, thereby to *form* the electrically conductive carbon coat.

Then, the paste of positive electrode active material prepared above was coated on the positive electrode collector having the electrically conductive carbon film by the apparatus shown in FIG. 3.

In this example, a gap (nozzle gap) of 570 µm through which the collector passes was provided between upper lip 13 of die nozzle 11 and smoothing nozzle 15 of the paste coating apparatus. Lower lip 14 was disposed so that protrusion 14a protruded by 200 µm than the upper lip 13 toward the nozzle gap. The paste of positive electrode active material was coated by discharging the paste from the slit gap 12 and spraying it onto the collector 1a moving upwardly. The paste was coated at a thickness of 450 µm on the side of the collector which faced the die nozzle 11 and at a thickness of 50 µm on the side (another side) which faced the smoothing nozzle 15 by adjusting the discharging amount and speed of the paste from the slit gap 12 and the moving speed and tension of the collector.

The side of the collector facing the die nozzle 11 was used as the side to face the negative electrode upon fabrication of the battery, whereby the ratio of the thickness of the paste coated on the side facing the negative electrode and the thickness of the paste coated on another side was at 9:1.

The total thickness of the positive electrode just after coated with the paste was about 540 µm, which was the sum of 500 µm of the thickness of the paste portion and about 40 µm of the thickness of the collector. The nozzle gap of the coating apparatus was set at 570 µm, and thus there was a difference of about 30 µm between the total thickness of the resulting positive electrode and the nozzle gap. This was a gap necessary for the collector passing through the nozzle gap at the time of coating. The positive electrode coated with the paste was then subjected to a drying step for vaporizing and removing the solvent in the paste, and, as a result, the solvent was removed and the thickness of the positive electrode decreased to about 250 µm from 540 µm. The positive electrode was further subjected to a pressing step and the thickness was decreased to about 150 µm. This positive electrode was cut to obtain a sheet-like positive electrode of 30 mm × 60 mm in size.

Separately, a positive electrode in which the collector having no paste on the top side as shown in FIG. 2 was obtained by carrying out the coating of the paste under the same conditions as above, except that the nozzle gap was widened to 680 µm from 570 µm.

A paste of a negative electrode active material was prepared by mixing a solution prepared by dissolving 40 g of P(VDF-HFP) in 300 g of acetone with 250 g of mesophase carbon (manufactured by Osaka Gas Co., Ltd.) of 6 µm in average particle size obtained by carbonization and graphitization of carbonaceous mesophase particles, 60 g of fibers (manufactured by Showa Denko Co., Ltd.) obtained by graphitization of vapor growth carbon fibers and 60 g of DBP. A copper lath metal of 50 µm in thickness was used as a negative electrode collector. An electrically conductive carbon coat was formed on the surface of the collector in the same manner as in making the positive electrode. The paste of negative electrode active material was coated on both sides of the copper lath metal at the same thickness and dried, followed by pressing by roll press to obtain a negative electrode sheet of about 300 µm in thickness and 30 mm × 60 mm in size.

A separator was produced in the following manner. 30 g of P(VDF-HFP) was dissolved in 300 g of acetone and 30 g of DBP was added thereto to obtain a mixed solution. This solution was coated on a glass plate and, then, acetone was vaporized and removed at a drying step to make a film of about 20 µm thick. This film was cut to a size of 30 mm × 60 mm.

On both sides of the above sheet-like negative electrode were laminated the above sheet-like positive electrodes so that the thicker active material layers of the positive electrodes faced the negative electrode with the film-like separators interposed between the negative electrode and the positive electrodes. Then, this laminate was pressed under heating by passing it between two press rollers heated at 120°C to integrate the laminate by fusion bonding with the polymer matrix, thereby producing a laminate electrode. This laminate electrode was immersed in diethyl ether to extract DBP from the polymer matrix, followed by vacuum drying at 50°C. The polymer matrix became porous by the extraction of DBP. This laminate electrode was inserted in an external housing made of a laminate sheet mainly composed of a resin film. Then, 3.2 g of a solution prepared by dissolving 1.5 mol/l of lithium hexafluorophosphate (LiPF₆) in a mixed solvent of ethylene carbonate and ethylmethyl carbonate (1:3 in volume ratio) was filled in the housing as an electrolyte. After the filling of electrolyte, the housing was repeatedly subjected to a reduced pressure of 0.35 atm. and then atmospheric pressure to accelerate vapor-liquid replacement to perform penetration of the electrolyte into the laminate electrode, followed by returning the pressure to atmospheric pressure and sealing the opening of the housing by heat sealing. Furthermore, the housing was heated at 45°C for 30 minutes to accelerate spreading of the electrolyte to the electrode portion, followed by carrying out charging and discharging to put the battery in dischargeable state. This battery was a battery of Example 1.

### Example 2

In the coating of the paste of positive electrode active material, the paste was coated at a thickness of 400 µm on the side of the collector which faced the die nozzle 11 and at a thickness of 100 µm on another side of the collector by adjusting the nozzle gap of the coating apparatus, the moving speed of the collector, the tension of the collector and others. Thus, the paste was coated in such a manner that the ratio of the thickness of the paste coated on the side of the collector which faces the negative electrode at the time of fabrication of a battery and the thickness of the paste coated on another side was kept at 8:2.

A battery was fabricated using the resulting positive electrode in the same construction and in the same manner as in Example 1. The resulting battery was a battery of Example 2.

### Example 3

Similarly, the paste of positive electrode active material was coated at a thickness of 350 µm on the side of the collector which faced the nozzle 11 and at a thickness of 150 µm on another side of the collector by adjusting the nozzle gap and others. Thus, the paste was coated in such a manner that the ratio of the thickness of the paste coated on the side of the collector which faces the negative electrode at the time of fabrication of a battery and the thickness of the paste coated on another side was kept at 7:3.

A battery was fabricated using the resulting positive electrode in the same construction and in the same manner as in Example 1. The resulting battery was a battery of Example 3.

### Comparative Example 1

In the coating of the paste of positive electrode active material, the paste was coated at a thickness of 300 µm on the side of the collector which faced the nozzle 11 and at a thickness of 200 µm on another side of the collector by adjusting the nozzle gap and others of the paste coating apparatus. Thus, the paste was coated in such a manner that the ratio of the thickness of the paste coated on the side of the collector which faces the negative electrode at the time of fabrication of a battery and the thickness of the paste coated on another side was kept at 6:4. A battery was fabricated using the resulting positive electrode in the same construction and in the same manner as in Example 1. The resulting battery was a battery of Comparative Example 1.

### Comparative Example 2

The paste of positive electrode active material was coated at a thickness of 500 µm on the side of the collector which faced the nozzle 11 and was not coated on another side of the collector. Here, the ratio of the thickness of the paste coated on the side of the collector which faces the negative electrode at the time of fabrication of a battery and the thickness of the paste coated on another side was kept at 10:0. This positive electrode was made by applying a resin film to one side of the collector, namely, the side facing the smoothing nozzle 15 to close the holes of the collector at the time of coating of the paste and peeling off the resin film after coating. A battery was fabricated using the resulting positive electrode in the same construction and in the same manner as in Example 1. The resulting battery was a battery of Comparative Example 2.

### Comparative Example 3

An aluminum foil of 40 µm thick having no holes was used as a positive electrode collector and the paste of positive electrode was coated thereon. Coating of the paste was carried out by discharging the paste of positive electrode active material onto both the left and right sides of the collector by a coating apparatus. The thickness of the paste coated was 450 µm on the side which faces the negative electrode at the time of fabrication of a battery and 50 µm on another side of the collector, and the ratio of the thickness of them was kept at 9:1. A battery was fabricated using the resulting positive electrode in the same construction and in the same manner as in Example 1. The resulting battery was a battery of Comparative Example 3.

One hundred batteries of each of Examples 1-3 and Comparative Examples 1-3 were fabricated, and discharge capacity of the batteries was measured and utilization ratio of the active material was calculated. The measurement of the discharge capacity was conducted by carrying out charging to 4.1 V at a charging current of 110 mA (0.2 C) and then discharging to 3.0 V at a discharging current of 550 mA (1 C).

Furthermore, the charging and discharging were repeated 500 times under the same charging and discharging conditions as above. Thereafter, the battery was disassembled, and the bonding state between the positive electrode active material and the collector was observed and the number of batteries in which peeling off occurred was counted.

Table 1 shows average discharge capacity, utilization ratio of active material and occurrence of peeling off in the batteries of Examples 1-3 and Comparative Examples 1-3.

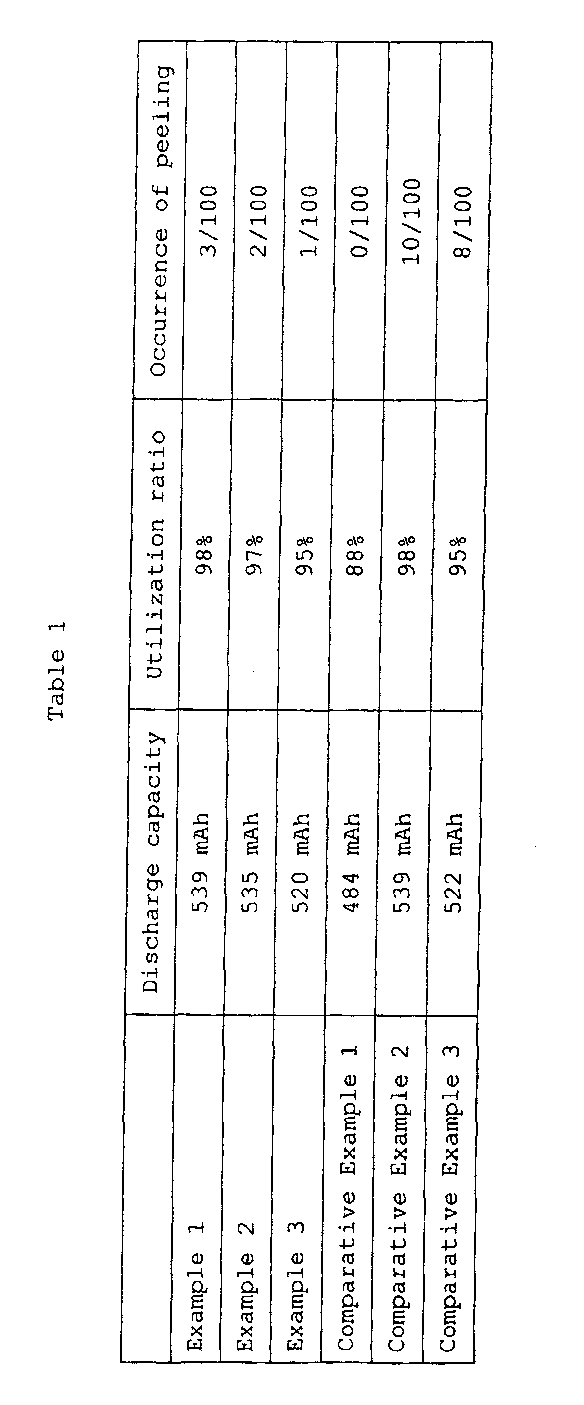

As can be seen from Table 1, adhesion between the collector and the active material was high in the batteries of Examples 1-3 and Comparative Example 1 because in these batteries the positive electrode collector was disposed inside the positive electrode active material layer. Therefore, the adhesion between the collector and the active material was not seriously damaged by the expansion and shrinkage of the active material caused by charging and discharging, and the number of occurrence of the peeling off was small.

In Comparative Example 2, the perforated collector was disposed on one side of the positive electrode active material layer. Therefore, the collector was supported only at the face contacting with the active material, and, hence, the number of occurrence of the peeling was greater.

In Comparative Example 3, the positive electrode collector was disposed at the same position as in Example 1. However, since the collector had no holes, the positive electrode active material layer on one side of the collector and the positive electrode active material layer on another side were not connected through the holes of the collector. Therefore, the number of occurrence of peeling off was greater than in Example 1 where a perforated collector was used.

The utilization ratio of the positive electrode active material can be increased with increase of the proportion of the positive electrode active material layer facing the negative electrode in the total thickness of the positive electrode active material layer. For this reason, in Comparative Example 1, since the active material layer on the side which did not face the negative electrode was thicker than other examples and was highly hindered in migration of lithium ions by the collector, the utilization ratio lowered. Furthermore, even when the total thickness of the positive electrode was the same and the positive electrode collector was disposed at the same position in the same total thickness, the structure of the collector greatly affected the migration of lithium ions and, as a result, a higher utilization ratio was obtained in Example 1 where a perforated collector was used than in Comparative Example 3 where a collector having no holes was used.

As mentioned above, in the case of a sheet-like positive electrode where a perforated collector is disposed in flushed state on the outer end surface side of a positive electrode active material which does not face a negative electrode or the paste is coated on the collector so that the ratio of the thickness of the positive electrode active material paste on the side facing the negative electrode and the thickness of the paste on another side is within the range of 9:1-7:3, peeling off of the collector from the positive electrode active material layer can be inhibited, and, besides, the utilization ratio can be increased by increasing the positive electrode active material which participates in the electromotive reaction.

As explained above, by improving the disposition construction of the positive electrode collector in the positive electrode active material layer, a solid state polymer battery which causes no failure in current collection caused by peeling off of the collector from the positive electrode active material layer can be provided. The utilization ratio of the positive electrode active material is improved and the battery has excellent battery characteristics.

## Claims

1. A solid state polymer battery which comprises a film-like or sheet-like negative electrode comprising a perforated collector on both sides of which are formed active material layers containing a polymer absorbing and retaining non-aqueous electrolyte, a film-like or sheet-like positive electrode comprising a perforated collector on which is formed an active material layer containing said polymer, and a film-like or sheet-like separator comprising said polymer, said positive electrodes being disposed on both sides of said negative electrode with said separators interposed between the positive electrodes and the negative electrode, followed by laminating and integrating them, **characterized in that**
the collector of the positive electrode is embedded in the positive electrode active material layer by coating a paste of the positive electrode material on both sides of the perforated collector so that a bottom plane of the collector facing the negative electrode is present at the position of 2/3 - 4/5 of the total thickness of the layer from the side facing the negative electrode, and the positive electrode active material layer corresponding to the remaining thickness being disposed on the outer side of the collector.

2. A solid state polymer battery according to claim 1, **characterized in that** the collector of the positive electrode comprises a punching metal or a lath metal made of aluminum or an aluminum coating material.

3. A solid state polymer battery according to claim 1, **characterized in that** the negative electrode comprises a porous copper collector on both sides of which are formed active material layers mainly composed of a carbon powder and containing a polymer absorbing and retaining a non-aqueous electrolyte and the positive electrode comprises a porous aluminum collector on which is formed an active material layer mainly composed of a composite metal oxide and containing said polymer.

4. A method for manufacturing a solid state polymer battery which comprises laminating and integrating film-like or sheet-like positive electrodes comprising a perforated collector on which are formed active material layers containing a polymer absorbing and retaining a non-aqueous electrolyte on both sides of a film-like or sheet-like negative electrode comprising a perforated collector on both sides of which are formed active material layers containing a polymer absorbing and retaining a non-aqueous electrolyte with film-like or sheet-like separators comprising said polymer interposed between the positive electrodes and the negative electrode, **characterized in that** the positive electrode is formed by coating a paste of the positive electrode active material on both sides of the perforated collector so that the ratio of thickness of the paste coated on the side of the collector facing the negative electrode and thickness of the paste coated on another side of the collector is within the range of 9:1-7:3, and then drying and pressing the coated collector.

5. A method for manufacturing a solid state polymer battery according to claim 4, **characterized in that** the collector of the positive electrode comprises a punching metal or a lath metal made of aluminum or an aluminum coating material and has a thickness of 25-60 µm.

## Patentansprüche

1. Festkörperpolymerbatterie, welche eine filmartige oder plattenartige negative Elektrode aufweist, die einen perforierten Kollektor aufweist, auf dessen beiden Seiten Schichten aktiven Materials, welche ein ein nichtwässriges Elektrolyt absorbierendes und haltendes Polymer enthalten, eine filmartige oder plattenartige positive Elektrode mit einem perforierten Kollektor, auf dem eine das Polymer enthaltende Schicht aktiven Materials gebildet ist, und ein filmartiger oder plattenartiger, das Polymer aufweisender Separator gebildet sind, wobei die positiven Elektroden auf beiden Seiten der negativen Elektrode so angeordnet sind, dass die Separatoren zwischen den positiven Elektroden und der negativen Elektrode liegen, gefolgt von Laminieren und Integrieren derselben, **dadurch gekennzeichnet, dass**
der Kollektor der positiven Elektrode in die Schicht aktiven Materials der positiven Elektrode durch derartiges Beschichten beider Seiten des perforierten Kollektors mit einer Paste des Materials der positiven Elektrode, dass eine untere Ebene des zur negativen Elektrode hin weisenden Kollektors sich an der Position 2/3 - 4/5 bezüglich der gesamten Dicke der Schicht von der zur negativen Elektrode hin weisenden Seite aus befindet, und sich die der verbleibenden Dicke entsprechende Schicht aktiven Materials der positiven Elektrode an der äußeren Seite des Kollektors befindet, eingebettet ist.

2. Festkörperpolymerbatterie nach Anspruch 1, **dadurch gekennzeichnet, dass** der Kollektor der positiven Elektrode ein Stanzmetall oder ein aus Aluminium gefertigtes Maschendrahtmetall oder ein Aluminiumbeschichtungsmaterial aufweist.

3. Festkörperpolymerbatterie nach Anspruch 1, **dadurch gekennzeichnet, dass** die negative Elektrode einen porösen Kupferkollektor aufweist, auf dessen beiden Seiten hauptsächlich aus einem Kohlenstoffpulver zusammengesetzte und ein ein nichtwässriges Elektrolyt absorbierendes und haltendes Polymer enthaltende aktive Materialschichten gebildet sind, und die positive Elektrode einen porösen Aluminiumkollektor aufweist, auf dem eine hauptsächlich aus einem zusammengesetzten Metalloxid bestehende und das Polymer enthaltende aktive Materialschicht gebildet ist.

4. Verfahren zum Herstellen einer Festkörperpolymerbatterie, welches die folgenden Schritte aufweist: Laminieren und Integrieren filmartiger oder plattenartiger positiver Elektroden mit einem perforierten Kollektor, auf welchem Schichten aktiven Materials gebildet sind, welche ein ein nichtwässriges Elektrolyt absorbierendes und haltendes Polymer enthalten, auf beiden Seiten einer filmartigen oder plattenartigen negativen Elektrode, die einen perforierten Kollektor aufweist, auf dessen beiden Seiten Schichten aktiven Materials, welche ein ein nichtwässriges Elektrolyt absorbierendes und haltendes Polymer mit das zwischen den positiven Elektroden und der negativen Elektrode angeordnete Polymer aufweisenden filmartigen oder plattenartigen Separatoren enthalten, **dadurch gekennzeichnet, dass** die positive Elektrode so durch Beschichten beider Seiten des perforierten Kollektors mit einer Paste des aktiven Materials der positiven Elektrode gebildet wird, dass das Verhältnis zwischen der Dicke der auf die zur negativen Elektrode hin weisende Seite des Kollektors aufgetragenen Paste und der Dicke der auf eine andere Seite des Kollektors aufgetragenen Paste innerhalb des Bereichs 9:1 - 7:3 liegt, und dann Trocken und Pressen des beschichteten Kollektors.

5. Verfahren zum Herstellen einer Festkörperpolymerbatterie nach Anspruch 4, **dadurch gekennzeichnet, dass** der Kollektor der positiven Elektrode ein Stanzmetall oder ein aus Aluminium gefertigtes Maschendrahtmetall oder ein Aluminiumbeschichtungsmaterial aufweist und eine Dicke von 25-60 µm aufweist.

## Revendications

1. Batterie de polymère à l'état solide qui comprend une électrode négative de type film ou de type feuille comprenant un collecteur perforé sur les deux côtés duquel sont formées des couches de matériau actif contenant un polymère absorbant et retenant un électrolyte non aqueux, une électrode positive de type film ou de type feuille comprenant un collecteur perforé sur lequel est formée une couche de matériau actif contenant ledit polymère, et un séparateur de type film ou de type feuille comprenant ledit polymère, lesdites électrodes positives étant disposées sur les deux côtés de ladite électrode négative avec lesdits séparateurs interposés entre les électrodes positives et l'électrode négative, suivi par leur stratification et leur intégration, **caractérisée en ce que**
le collecteur de l'électrode positive est incorporé dans la couche de matériau actif d'électrode positive par revêtement d'une pâte du matériau d'électrode positive sur les deux côtés du collecteur perforé de sorte qu'un plan inférieur du collecteur en regard de l'électrode négative soit présent à la position de 2/3 à 4/5 de l'épaisseur totale de la couche à partir du côté en regard de l'électrode négative, et la couche de matériau actif d'électrode positive correspondant à l'épaisseur restante étant disposée sur le côté externe du collecteur.

2. Batterie de polymère à l'état solide selon la revendication 1, **caractérisée en ce que** le collecteur de l'électrode positive comprend un métal de poinçonnage ou un métal d'usinage constitué d'aluminium ou d'un matériau de revêtement d'aluminium.

3. Batterie de polymère à l'état solide selon la revendication 1, **caractérisée en ce que** l'électrode négative comprend un collecteur en cuivre poreux sur les deux côtés duquel sont formées des couches de matériau actif principalement constituées d'une poudre de carbone et contenant un polymère absorbant et retenant un électrolyte non aqueux et l'électrode positive comprend un collecteur en aluminium poreux sur lequel est formée une couche de matériau actif principalement composée d'un oxyde métallique composite et contenant ledit polymère.

4. Procédé de fabrication d'une batterie de polymère à l'état solide qui comprend la stratification et l'intégration d'électrodes positives de type film ou de type feuille comprenant un collecteur perforé sur lequel sont formées des couches de matériau actif contenant un polymère absorbant et retenant un électrolyte non aqueux sur les deux côtés d'une électrode négative de type film ou de type feuille comprenant un collecteur perforé sur les deux côtés duquel sont formées des couches de matériau actif contenant un polymère absorbant et retenant un électrolyte non aqueux, les séparateurs de type film ou de type feuille comprenant ledit polymère interposé entre les électrodes positives et l'électrode négative, **caractérisé en ce que** l'électrode positive est formée par revêtement d'une pâte du matériau actif d'électrode positive sur les deux côtés du collecteur perforé, de sorte que le rapport de l'épaisseur de la pâte déposée sur le côté du collecteur en regard de l'électrode négative et l'épaisseur de la pâte déposée sur un autre côté du collecteur se situent dans la gamme de 9:1 à 7:3, puis par séchage et pressage du collecteur déposé.

5. Procédé de fabrication d'une batterie de polymère à l'état solide selon la revendication 4, **caractérisé en ce que** le collecteur de l'électrode positive comprend un métal de poinçonnage ou un métal d'usinage constitué d'aluminium ou d'un matériau de revêtement d'aluminium et présente une épaisseur de 25 à 60 µm.
